# EUROPÄISCHE PATENTSCHRIFT

(11) **EP 2 456 591 B1**
(45) Veröffentlichungstag und Bekanntmachung des Hinweises auf die Patenterteilung: **04.01.2017**
(21) Anmeldenummer: 10743069.6
(22) Anmeldetag: 26.07.2010
(51) Int. Cl.: B23K 20/10, B06B 1/00, B06B 3/00, B26D 7/08, B29C 65/08

(54) **VORRICHTUNG ZUM BEARBEITEN EINER MATERIALBAHN MIT ULTRASCHALL UND MIT EINER ABSTÜTZUNG FÜR DIE SONOTRODE**
DEVICE FOR MACHINING A MATERIAL WEB USING ULTRASOUND AND COMPRISING A SUPPORT FOR THE SONOTRODE
DISPOSITIF SERVANT AU TRAITEMENT D'UNE BANDE DE MATÉRIAU AU MOYEN D'ULTRASONS ET D'UN SUPPORT POUR LA SONOTRODE

(30) Priorität: 24.07.2009 DE 102009034732; 13.01.2010 DE 102010004407
(43) Veröffentlichungstag der Anmeldung: 30.05.2012
(73) Patentinhaber: Schober GmbH Holding, 71735 Eberdingen (DE)
(72) Erfinder: WITTMAIER, Dennis, Dr. Ing., 71665 Vaihingen (DE); KOSTEWA, René, 74535 Mainhardt (DE)
(86) Internationale Anmeldenummer: PCT/EP2010/060769
(87) Internationale Veröffentlichungsnummer: WO 2011/009959

(56) Entgegenhaltungen:
- EP-A2- 0 790 888
- DE-C1- 19 813 121
- US-B1- 6 190 296

## Beschreibung

Die Erfindung betrifft eine Vorrichtung zum Bearbeiten einer Materialbahn mit den Merkmalen des Oberbegriffs des Anspruchs 1.

Es ist bekannt, dass mittels Ultraschall-Sonotroden Materialbahnen verbunden, geschnitten, perforiert, gestanzt, geprägt, wärmebehandelt oder auf ähnliche Weise bearbeitet werden. Entscheidend ist bei den Sonotroden, dass deren Spitze mit einer exakt vorgegebenen Kraft auf die Materialbahn drückt oder presst, so dass die zum Bearbeiten erforderliche Energie in die Materialbahn eingebracht werden kann. Aufgrund der bei der Bearbeitung entstehenden Wärme ändert sich die Länge des Bearbeitungswerkzeugs, zum Beispiel der Sonotrode, was zu einer Änderung der Spalthöhe führen kann. Ein zu enger Spalt führt jedoch in der Regel zu einer Verschlechterung der Materialbearbeitung und kann unter Umständen in einer Beschädigung der Materialbahn oder der Werkzeuge resultieren, da die Anpresskraft zu hoch ist und somit zu viel Energie in die Materialbahn eingebracht wird. Ein zu weiter Spalt ergibt eine nicht akzeptable Schweiß- oder Schneidqualität, da die Anpresskraft zu gering ist. Es wird daher angestrebt, die Anpresskraft auf einen gewünschten Wert möglichst konstant zu halten.

Auch eine Änderung der Bearbeitungsgeschwindigkeit, also der Durchlaufgeschwindigkeit der Materialbahn durch den Arbeitsspalt, macht eine Änderung der Anpresskraft erforderlich, da zum Beispiel bei einer Geschwindigkeitserhöhung in kürzerer Zeit die erforderliche Schweißenergie in die Materialbahn eingebracht werden muss. Also muss in diesem Fall die Anpresskraft erhöht werden.

Die EP 0 790 888 A1 betrifft eine Vorrichtung zum Bearbeiten einer Materialbahn, die den oben genannten Aufbau aufweist. Mit dieser Vorrichtung soll ein weitestgehend konstanter Spalt für die Bearbeitung der Materialbahn aufrechterhalten werden, so dass bei unterschiedlicher Materialdicke während des Betriebs die Reaktionskräfte von der starren Lagerung vollständig abgestützt werden. Die Sonotrode weicht also nicht aus. Als nachteilig wird bei dieser Vorrichtung angesehen, dass bei schwankenden Materialdicken aufgrund der konstanten Spalthöhe unterschiedlich hohe Schweißkräfte in das zu verschweißende Material eingeleitet werden, was zu unterschiedlichen Schweißqualitäten führen kann. Außerdem ist die Abstützung der Sonotrode im Schwingungsknoten nicht immer einfach realisierbar.

Aus dem nächstliegenden Stand der Technik DE 198 13 121 C1 ist eine Vorrichtung zum Bearbeiten einer kontinuierlichen Materialbahn bekannt geworden, bei welcher die Sonotrode in ihrem Schwingungsknoten einen Umfangsflansch aufweist, der von elastischen Ringen getragen wird. Diese Ringe üben sowohl auf die Quer- als auch auf die Längskräfte Drücke aus, wobei die Sonotrode aber in Querrichtung dennoch ausweichen kann.

Die US 6,190,296 B1 offenbart eine Ultraschallschweißvorrichtung, bei welcher die Sonotrode von Haltefingern seitlich gehalten wird, wobei die Haltefinger in Querrichtung relativ starr sind. In Längsrichtung weisen die Haltefinger eine derartige Größe auf, dass sie von der Oszillationsbewegung der Sonotrode mitgenommen werden. Sie üben aber Kräfte in Längsrichtung der Sonotrode aus, wodurch die Schweißkräfte der Sonotrode vermindert werden.

Der Erfindung liegt daher die Aufgabe zugrunde, eine Ultraschallbearbeitungsvorrichtung bereitzustellen, mit welcher die obigen Probleme einfacher gelöst werden können.

Diese Aufgabe wird mit einer Bearbeitungsvorrichtung gelöst, die die Merkmale des Anspruchs 1 aufweist.

Der wesentliche Unterschied zum Stand der Technik besteht darin, dass das die Ultraschalleinheit einerseits nicht fest mit dem Maschinenständer verbunden ist, sondern mit einem Schlitten. Dies hat den wesentlichen Vorteil, dass die Ultraschalleinheit über den Schlitten permanent verfahren werden kann und das durch die Spalthöhe permanent an die aktuelle Schweißsituation, insbesondere an die Materialdicke usw. angepasst werden kann. Hierfür ist ein an sich bekannter Antrieb, z.B. ein Servomotor mit einem geeigneten Getriebe vorgesehen, mit dem der Schlitten an Maschinenständer verfahren wird. Außerdem ist nicht die Sonotrode fest im Schlitten eingespannt, sondern der Booster, also das Amplitudentransformationsstück ist mit dem Schlitten verbunden. Um nun zu verhindern, dass die Sonotrode große Querkräfte aufnehmen und selbst abstützen muss, ist die Sonotrode abgestützt, indem an dieser eine Abstützung angreift. Querkräfte treten bei der Bearbeitung von Band- oder Endlosmaterial auf, da dieses zwischen der Sonotrode und dem Gegenwerkzeug hindurchgeführt wird. Das Gegenwerkzeug kann als Walze ausgeführt sein, so dass dort keine Querkräfte auftreten. Die Sonotrode ist jedoch bezüglich des Werkstücks ortsfest und liegt mit der Schweißkraft an diesem an. Abhängig vom Reibungskoeffizienten ergeben sich dabei nicht vernachlässigbare Querkräfte. Da die Sonotrode mitunter eine große Länge aufweisen kann, erzeugen diese Querkräfte hohe Biegemomente an der Verbindungsstelle von Sonotrode und Booster und gegebenenfalls auch an der Verbindungsstelle von Booster und Konverter, die von den Verbindungselementen aufgefangen und übertragen werden müssen. Erfindungsgemäß ist die Abstützung bezüglich der Sonotrode kraftneutral und leitet keine in Längsrichtung der Sonotrode wirkenden Kräfte in die Sonotrode ein. Dieses Merkmal trägt zusätzlich dazu bei, dass die auf das Werkstück ausgeübten Schweiß- und Anpresskräfte nicht gestört oder verfälscht werden. Die über die Ultraschallschwingung erzeugten Schweißkräfte werden nicht beeinflusst.

Erfindungsgemäß ist die Abstützung temperaturbeständig und weist einen Temperaturausdehnungskoeffizienten auf, der kleiner ist als 10⁻⁵/K und ist im oder am Schlitten (26) befestigt.

Im Gegensatz hierzu greift die Abstützung die Sonotrode senkrecht zu deren Längsrichtung an. Dadurch können die Querkräfte ohne Umlenkung aufgenommen und abgeleitet werden.

Um die Ultraschallverschweißung nicht zu behindern, d.h. die Schweißkräfte nicht zu beeinflussen oder die Schweißfrequenz zu verfälschen, führen die Abstützung und die Sonotrode Relativbewegungen zueinander aus.

Bevorzugt greift die Abstützung linienförmig oder flächig an wenigstens einer Seitenfläche der Sonotrode an. Dabei kann die Abstützung auch über mehrere Linien an der Sonotrode anliegen.

Um sowohl eine übermäßige Abnutzung zu vermeiden als auch einer unerwünschten Wärmeentwicklung vorzubeugen, besteht die Abstützung aus Keramik, einer Invar-Legierung oder einem gehärteten Stahl. Diese Materialien sind sehr verschleißfest und besitzen bei geeigneter Schmierung gegenüber der Sonotrode einen vernachlässigbaren Reibungskoeffizienten.

Dadurch, dass die Abstützung im Schlitten befestigt ist, ist eine Verlagerung der Ultraschalleinheit in Richtung auf das Werkstück und weg von diesem, also in der Hauptschwingungsrichtung oder in der Längsrichtung der Sonotrode, problemlos möglich.

Um eine exakte Führung der Sonotrode zu gewährleisten und um die Transportrichtung der Materialbahn auch umkehren zu können, greift die Abstützung beidseitig und insbesondere an einander gegenüber liegenden Seiten an der Sonotrode an. Insbesondere greift die Abstützung im Schwingungsknotenpunkt der Sonotrode an. Eine Beeinträchtigung der Sonotrode ist in diesem Punkt am geringsten.

Die Erfindung wird in der nachfolgenden Zeichnung im Detail erläutert, wobei die:
- Figur 1: eine Ausführungsform der Erfindung zeigt, bei der die seitliche Abstützungen an der Sonotrode anliegen; und die
- Figur 2: eine Vergrößerung des die Abstützung zeigenden Ausschnitts II gemäß Figur 1 zeigt.

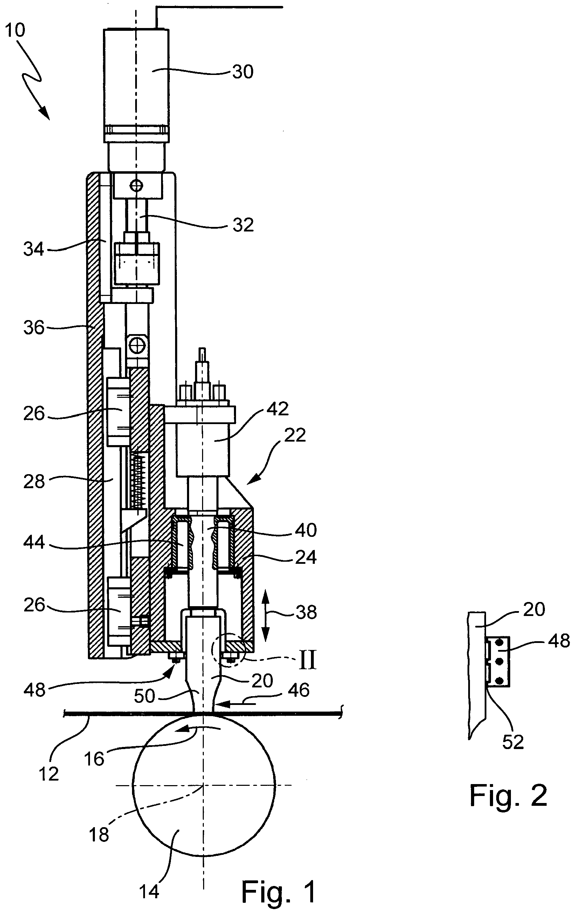

Die Figur 1 zeigt eine Ultraschallbearbeitungsvorrichtung 10, mit welcher eine Materialbahn 12 bearbeitet werden kann. Hierfür weist die Ultraschallbearbeitungsvorrichtung 10 ein Gegenwerkzeug 14 auf, welches als Zylinder ausgeführt ist und in Richtung des Pfeils 16 um eine Achse 18 drehbar gelagert ist. Außerdem ist eine insgesamt mit 20 bezeichnete Ultraschallsonotrode vorgesehen, die Teil einer insgesamt mit 22 bezeichneten Ultraschalleinheit ist. Zwischen dem Gegenwerkzeug 14 und der Sonotrode 20 befindet sich ein Spalt, durch den die Materialbahn 12 hindurchgeführt wird.

Die Ultraschalleinheit 22 ist an einem Halter 24 befestigt, welcher über zwei Schlitten 26, die ihrerseits an einer Schiene 28 verschieblich gelagert sind, in Richtung auf das Gegenwerkzeug 14 und weg von diesem bewegt werden kann. Hierfür ist ein Antrieb 30 mit einem Abtriebselement 32 vorgesehen. Der Antrieb 28 ist über eine geeignete Haltevorrichtung 34 an einem Halterahmen 36 befestigt. Das Antriebselement 32 wirkt über die Schlitten 26 auf den Halter 24 und bewirkt dessen Verlagerung in Richtung des Doppelpfeils 38.

Die Ultraschalleinheit 22 weist zusätzliche Bauteile auf. Die Sonotrode 20 ist an einem (Amplitudentransformationsstück), nämlich einem Booster 40 befestigt, wohingegen der Booster an einem Konverter 42 fixiert ist. Der Booster 40 und der Konverter 42 sind Bauteile der Ultraschalleinheit 22. Es ist deutlich erkennbar, dass der Booster 40 starr über eine Klemmeinrichtung 44 am Halter 24 montiert ist, so dass die Klemmeinrichtung 44 die Ultraschalleinheit 22 trägt.

Wird die Materialbahn 12 in Richtung der Pfeils 16 unter der Sonotrode 20 hindurchbewegt und von der Sonotrode 20, die mit der Schweißkraft an der Materialbahn 12 anliegt, bearbeitet, dann über die Materialbahn 12 eine Querkraft in Richtung des Pfeils 46 auf die Sonotrode 20 aus. Um die Verbindungsstelle von Sonotrode 20 zum Booster 40 zu entlasten, sind zwei Abstützungen 48 vorgesehen, die seitlich an der Sonotrode 20, also an deren Seitenflächen angreifen und die Sonotrode 20 in Querrichtung abstützen. Mit Querrichtung ist die senkrecht zur Hauptschwingungsrichtung oder Längsrichtung 50 verlaufende Richtung gemeint. Die Abstützungen 48 liegen an der Sonotrode 20 lediglich an. Sie fixieren die Sonotrode 20 nicht und sie verbinden die Sonotrode 20 auch nicht starr mit dem Halter 24. Die Sonotrode 20 ist zwischen den Abstützungen 48 frei in Richtung deren Längsachse 50 verschieblich. Vorteilhaft greift die Abstützung 48 im Schwingungsknoten der Sonotrode 20 an.

Die Figur 2 zeigt in vergrößerter Darstellung die Abstützung 48, die bei diesem Ausführungsbeispiel drei Stege 52 aufweist, die an der Sonotrode 20 linienförmig anliegen. Dabei befindet sich vorteilhafterweise die mittlere Linie im Schwingungsknoten der Sonotrode 20. Diese Abstützung 48 ist als Einsetzteil ausgebildet und kann zum Abstützen anderer Sonotroden gegen eine andere Ausführungsform ausgetauscht werden. Dadurch wird die Möglichkeit geschafften, die Sonotrode 20 nicht nur linienförmig sondern z.B. auch punktförmig oder flächig abzustützen.

## Patentansprüche

1. Vorrichtung (10) zum Bearbeiten einer Materialbahn (12) mit einer einen Konverter (42), einen Booster (40) und eine Sonotrode (20) aufweisenden Ultraschalleinheit (22) und einem Gegenwerkzeug (14), wobei die Materialbahn (12) durch einen Spalt zwischen der Sonotrode (20) und dem Gegenwerkzeug (14) geführt und von der Sonotrode (20) bearbeitet wird, wobei die Ultraschalleinheit (22) über einen verfahrbaren Schlitten (26) bezüglich dem Gegenwerkzeug (14) verstellbar ist, und wobei eine Abstützung (48) vorgesehen ist, die an wenigstens einer Seitenfläche der Sonotrode (20) angreift und die Sonotrode (20) in deren Längsrichtung (50) führt, **dadurch gekennzeichnet, dass** nicht die Sonotrode (20) sondern der Booster (40) fest mit dem Schlitten (26) verbunden ist und, wobei die Abstützung (48) einen Temperaturausdehnungskoeffizienten aufweist, der kleiner ist als 10⁻⁵/K und im oder am Schlitten (26) befestigt ist, so dass die Abstützung (48) bezüglich der Sonotrode (20) kraftneutral ist und keine in Längsrichtung(50) der Sonotrode (20) wirkenden Kräfte in die Sonotrode (20) einleitet.

2. Vorrichtung nach Anspruch 1, **dadurch gekennzeichnet, dass** die Abstützung (48) die Sonotrode (20) senkrecht zu deren Längsrichtung (50) abstützt.

3. Vorrichtung nach einem der vorhergehenden Ansprüche, **dadurch gekennzeichnet, dass** die Abstützung (48) und die Sonotrode (20) Relativbewegungen zueinander ausführen.

4. Vorrichtung nach einem der vorhergehenden Ansprüche, **dadurch gekennzeichnet, dass** die Abstützung (48) linienförmig oder flächig an wenigstens einer Seitenfläche der Sonotrode (20) angreift.

5. Vorrichtung nach einem der vorhergehenden Ansprüche, **dadurch gekennzeichnet, dass** die Abstützung (48) aus Keramik, einer Invar-Legierung oder einem gehärteten Stahl besteht.

6. Vorrichtung einem der vorhergehenden Ansprüche, **dadurch gekennzeichnet, dass** die Abstützung (48) temperaturbeständig ist.

7. Vorrichtung nach einem der vorhergehenden Ansprüche, **dadurch gekennzeichnet, dass** die Abstützung (48) beidseitig und insbesondere an einander gegenüber liegenden Seiten an der Sonotrode (20) angreift.

8. Vorrichtung nach einem der vorhergehenden Ansprüche, **dadurch gekennzeichnet, dass** die Abstützung (48) im Schwingungsknotenpunkt der Sonotrode (20) angreift.

## Claims

1. Apparatus (10) for the processing of a material web (12), with an ultrasonic unit (22) containing a converter (42), a booster (40) and a sonotrode (20), and a mating tool (14), wherein the material web (12) is guided through a gap between the sonotrode (20) and the mating tool (14) and is processed by the sonotrode (20), wherein the ultrasonic unit (22) may be adjusted relative to the mating tool (14) via a traversable slide (26), and wherein there is provided a support (48) which acts on at least one side face of the sonotrode (20) and guides the sonotrode (20) in its longitudinal direction (50), **characterised in that** not the sonotrode (20) but instead the booster (40) is permanently connected to the slide (26) and wherein the support (48) has a coefficient of thermal expansion which is less than 10⁻⁵/K and is fixed in or on the slide (26), so that the support (48) is force-neutral relative to the sonotrode (20) and does not initiate in the sonotrode (20) any forces acting in the longitudinal direction (50) of the sonotrode (20).

2. Apparatus according to claim 1, **characterised in that** the support (48) supports the sonotrode (20) perpendicular to its longitudinal direction (50).

3. Apparatus according to any of the preceding claims, **characterised in that** the support (48) and the sonotrode (20) execute movements relative to one another.

4. Apparatus according to any of the preceding claims, **characterised in that** the support (48) acts in a straight line or flat against at least one side face of the sonotrode (20).

5. Apparatus according to any of the preceding claims, **characterised in that** the support (48) is made of ceramic material, an Invar alloy or a hardened steel.

6. Apparatus according to any of the preceding claims, **characterised in that** the support (48) is temperature-resistant.

7. Apparatus according to any of the preceding claims, **characterised in that** the support (48) acts on the sonotrode (20) on both sides and in particular on opposite sides.

8. Apparatus according to any of the preceding claims, **characterised in that** the support (48) acts at the vibration nodal point of the sonotrode (20).

## Revendications

1. Dispositif (10) servant à usiner une bande de matériau (12) à l'aide d'une unité à ultrasons (22), présentant un convertisseur (42), un amplificateur (40) et une sonotrode (20), et d'un outil complémentaire (14), dans lequel la bande de matériau (12) est guidée à travers une fente entre la sonotrode (20) et l'outil complémentaire (14) et est usinée par la sonotrode (20), dans lequel l'unité à ultrasons (22) peut être ajustée par rapport à l'outil complémentaire (14) par l'intermédiaire d'un chariot (26) pouvant être déplacé, et dans lequel un soutien (48) est prévu, lequel s'engage au niveau au moins d'une surface latérale de la sonotrode (20) et qui guide la sonotrode (20) dans sa direction longitudinale (50), **caractérisé en ce que** non pas la sonotrode (20) mais l'amplificateur (40) est relié de manière solidaire au chariot (26), et
dans lequel le soutien (48) présente un coefficient de dilatation thermique, qui est inférieur à 10⁻⁵/K, et est fixé dans ou au niveau du chariot (26) si bien que le soutien (48) est neutre en matière de force par rapport à la sonotrode (20) et n'imprime dans la sonotrode (20) aucune force agissant dans la direction longitudinale (50) de la sonotrode (20).

2. Dispositif selon la revendication 1, **caractérisé en ce que** le soutien (48) soutient la sonotrode (20) de manière perpendiculaire par rapport à sa direction longitudinale (50).

3. Dispositif selon l'une quelconque des revendications précédentes, **caractérisé en ce que** le soutien (48) et la sonotrode (20) exécutent l'un par rapport à l'autre des déplacements relatifs.

4. Dispositif selon l'une quelconque des revendications précédentes, **caractérisé en ce que** le soutien (48) s'engage de manière linéaire ou à plat au niveau au moins d'une surface de latérale de la sonotrode (20).

5. Dispositif selon l'une quelconque des revendications précédentes, **caractérisé en ce que** le soutien (48) est constitué de céramique, d'un alliage Invar ou d'un acier durci.

6. Dispositif selon l'une quelconque des revendications précédentes, **caractérisé en ce que** le soutien (48) est résistant à la température.

7. Dispositif selon l'une quelconque des revendications précédentes, **caractérisé en ce que** le soutien (48) s'engage, de part et d'autre et en particulier au niveau de côtés se faisant face les uns les autres, au niveau de la sonotrode (20).

8. Dispositif selon l'une quelconque des revendications précédentes, **caractérisé en ce que** le soutien (48) s'engage dans le point nodal de vibrations de la sonotrode (20).
